# EUROPÄISCHE PATENTSCHRIFT

(11) **EP 2 179 960 B1**
(45) Veröffentlichungstag und Bekanntmachung des Hinweises auf die Patenterteilung: **27.01.2016**
(21) Anmeldenummer: 09172858.4
(22) Anmeldetag: 13.10.2009
(51) Int. Cl.: B67C 3/24, B67C 7/00, B65G 47/86

(54) **Vorrichtung zum Transportieren von Behältnissen**
Device for transporting containers
Dispositif de transport de récipients

(30) Priorität: 22.10.2008 DE 102008052768
(43) Veröffentlichungstag der Anmeldung: 28.04.2010
(73) Patentinhaber: Krones AG, 93073 Neutraubling (DE)
(72) Erfinder: Winkler, Günter, 93199, Zell (DE); Wels, Harald, 93073, Neutraubling (DE)
(74) Vertreter: Bittner, Bernhard

(56) Entgegenhaltungen:
- EP-A1- 2 100 815
- DE-A1- 10 325 693
- DE-A1- 19 816 239
- DE-A1-102006 023 531

## Beschreibung

Die vorliegende Erfindung bezieht sich auf eine Vorrichtung zum Transportieren von Behältnissen gemäß dem Oberbegriff des Anspruchs 1 und wie aus der DE 10 2006 023 531 A1 bekannt, und insbesondere auf eine Vorrichtung zum Transportieren von mit einer Flüssigkeit befüllten Behältnissen. Bei industriellen Abfüllanlagen ist es aus dem Stand der Technik seit längerem bekannt, dass zunächst Behältnisse mit einem Getränk befüllt werden und anschließend mit einer Verschließanlage verschlossen werden. Daher ist es erforderlich, dass die Behältnisse zumindest über eine kurze Transportstrecke in gefülltem, jedoch noch unverschlossenem Zustand, gefördert werden.

Dabei werden üblicherweise miteinander zusammenwirkende Transportsterne eingesetzt, wobei die Behältnisse beispielsweise von einer Befüllungseinrichtung an einen Transportstern übergeben werden und von diesem Transportstern wiederum an einen Verschließer übergeben werden. Derartige Anlagen arbeiten dabei üblicherweise zufrieden stellend. Es hat sich jedoch herausgestellt, dass bei der Übergabe der Behältnisse von einer Befüllungseinrichtung an einen Transportstern die Behältnisse teilweise stark geschüttelt werden, was sich aufgrund der permanent steigenden Arbeitsgeschwindigkeiten noch erhöht. In solchen Fällen kann es zu einem Überschwappen von Flüssigkeit aus dem gefüllten Behältnis kommen.

Der vorliegenden Erfindung liegt daher die Aufgabe zugrunde, eine Vorrichtung und ein Verfahren zur Verfügung zu stellen, welche einen effizienten und insbesondere verschmutzungsfreien Transport von Behältnissen ermöglichen. Diese Erfindung wird durch die Gegenstände der unabhängigen Ansprüche 1 und 7 erreicht. Vorteilhafte Ausführungsformen und Weiterbildungen sind Gegenstand der Unteransprüche.

Eine erfindungsgemäße Vorrichtung nach Anspruch 2 weist eine Befüllungseinrichtung auf, welche die Behältnisse mit einer Flüssigkeit befüllt, sowie eine erste Transporteinrichtung, welche einen drehbaren Träger und eine Vielzahl von an diesem Träger angeordneten ersten Greifelementen zum Greifen der gefüllten Behältnisse aufweist. Weiterhin ist eine zweite Transporteinrichtung vorgesehen, welche eine Vielzahl von Transportelementen zum Transportieren der Behältnisse aufweist, wobei die erste Transporteinrichtung und die zweite Transporteinrichtung derart angeordnet sind, dass die Behältnisse in einem vorgegebenen zweiten Übergabebereich von einer Transporteinrichtung an die andere Transporteinrichtung übergeben werden. Erfindungsgemäß sind die Greifelemente wenigstens der ersten Transporteinrichtung in ihrer Gesamtheit gegenüber dem Träger bewegbar.

Im Stand der Technik sind üblicherweise auch Greifelemente wie Greifklammern und dergleichen an rotierenden Trägern angeordnet. Dabei ist es möglich, dass diese Greifelemente (teilweise) bewegbar sind, beispielsweise um ein Behältnis zu greifen. Üblicherweise sind jedoch die Greifelemente nicht ihrer Gesamtheit gegenüber dem Träger bewegbar, wie beispielsweise verschiebbar. Durch die Ausgestaltung, welche gegenüber dem Träger, wie einer Trägerplatte, bewegbare Greifelemente vorsieht, wird erreicht, dass eine ruckärmere Übergabe der Behältnisse beispielsweise von der Befüllungseinrichtung an die erste Transporteinrichtung oder auch von der ersten Transporteinrichtung an die zweite Transporteinrichtung ermöglicht wird.

Die Greifelemente werden damit nicht nur entlang einer Kreisbahn bewegt, sondern auch in einer von der Kreisbahn abweichenden Richtung, d.h. einer radialen Richtung. Bei der weiteren Transporteinrichtung kann es sich um eine einem Verschließer zugeordnete Transporteinrichtung oder eine dem Verschließer vorgeschaltete Transporteinrichtung handeln, es wäre jedoch auch möglich, dass die zweite Transporteinrichtung der Befüllungseinrichtung zugeordnet ist, bzw. Bestandteil der Befüllungseinrichtung und die Behältnisse an die erste Transporteinrichtung übergibt.

Durch die erfindungsgemäße Ausgestaltung ist es möglich, dass die Behältnisse nicht, wie im Stand der Technik, auf einer Verbindungslinie zwischen den Mittelpunkten der jeweils an der Übergabe beteiligten Transporteinrichtungen übergeben werden, sondern entlang einer sich beispielsweise tangential zu der (kreisförmigen) Transportbahn erstreckenden Bahn.

Die Greifelemente (in ihrer Gesamtheit) sind in einer radialen Richtung gegenüber dem Träger bewegbar. Erfindungsgemäß handelt es sich um eine rein radiale Bewegung. Es wäre jedoch auch möglich, dass die Greifelemente jeweils an einem an dem Träger schwenkbaren Ausleger angeordnet sind und durch ein Schwenken dieses Auslegers auch eine Bewegung in der radialen Richtung des Trägers bewegt wird. Daneben wären auch Kombinationen aus einer Schwenkbewegung und einer radialen Bewegung denkbar.

Die ersten Greifelemente sind derart an dem Träger angeordnet, dass sie wenigstens abschnittsweise entlang einer kreisförmigen Bahn bewegt werden. Dabei sind die Greifelemente insbesondere in demjenigen Bereich, in denen keine Relativbewegung der Greifelemente zwischen dem Träger und den Greifelementen auftritt, entlang einer kreisförmigen Bahn bewegbar. Bei dem Träger kann es sich beispielsweise um eine kreisförmige drehbare Scheibe handeln.

Bei einer erfindungsgemäßen Ausführungsform sind die ersten Greifelemente derart gegenüber einem Träger angeordnet, dass sie wenigstens in dem Übergabebereich entlang einer im Wesentlichen geradlinigen und insbesondere zu der Kreisbahn tangentialen Bahn bewegt werden. Bei dieser Ausführungsform wird erreicht, dass die Behältnisse in dem Übergabebereich geradlinig oder im Wesentlichen tangential bewegt werden, um ein Überschwappen der in den Behältern angeordneten Flüssigkeit zu verhindern.

Die ersten Greifelemente sind auch in dem ersten Übergabebereich, in dem die Behältnisse von der Befüllungseinrichtung an die erste Transporteinrichtung übergeben werden, entlang einer im Wesentlichen geradlinigen Bahn bewegbar. Unter einer im Wesentlichen geradlinigen Bahn wird verstanden, dass die Behältnisse in diesem Bereich entweder vollständig entlang einer geraden Linie bewegt werden oder aber entlang einer gekrümmten Bahn, wobei diese gekrümmte Bahn jedoch einen Krümmungsradius aufweist, der wenigstens doppelt so hoch ist, wie ein Krümmungsradius entlang einer übrigen Bewegungsbahn der Behältnisse, bevorzugt wenigstens viermal so groß und besonders bevorzugt wenigstens acht mal so groß. Durch diese geradlinige Bewegung ist eine im Wesentlichen ruckfreie Übergabe der Behältnisse an die erste Transporteinrichtung und von der ersten Transporteinrichtung möglich, was genauer unter Bezugnahme auf die Figuren erläutert wird.

Bei einer weiteren bevorzugten Ausführungsform sind die ersten Greifelemente jeweils an Stangenkörpern angeordnet, und diese Stangenkörper erstrecken sich in der radialen Richtung. Es wäre jedoch auch möglich, dass diese Stangenkörper sich in einer von der radialen Richtung abweichenden Richtung erstrecken und/oder um einen gewissen Schwenkpuhkt geschwenkt werden. Ein radialer Verlauf der Stangenkörper ist jedoch besonders geeignet, um eine einfache Bewegung der Greifelemente, die gleichwohl zu einem ruckarmen Transport der gefüllten Behältnisse führt, zu erreichen.

Bevorzugt weist die erste Transporteinrichtung einen Führungskörper auf, der die Stangenkörper kontaktiert, um deren Bewegung in der radialen Richtung zu bewirken. Dabei kann es sich beispielsweise um eine stationär und radial innerhalb der Stangenkörper angeordnete Führungskurve handeln, welche die Stangenkörper kontaktiert und damit je nach Relativstellung der Stangenkörper gegenüber dieser Führungskurve unterschiedliche radiale Positionen der Stangenkörper bewirkt.

Dabei wäre es möglich, dass eine Vorspanneinrichtung, wie eine Feder, vorgesehen ist, welche die einzelnen Führungskörper nach innen, d. h. in Richtung des Führungskörpers, vorspannt. Es wäre jedoch auch möglich, dass Federelemente in eine entgegengesetzte Richtung wirken und die Stangenkörper in eine Führungskurve eingehakt sind. Ebenso wäre möglich, die Führungskurve als Nutkurve auszuführen. Auch wäre es möglich, dass Motoren, insbesondere Servomotoren vorgesehen sind, welche eine Bewegung der einzelnen Stangenkörper in radialer Richtung steuern.

Bei einer weiteren vorteilhaften Ausführungsform sind an dem Träger eine Vielzahl von Führungseinrichtungen angeordnet, wobei diese Führungseinrichtungen jeweils eine Bewegung der Stangenkörper in der radialen Richtung führen.

Die vorliegende Erfindung ist auf eine Vorrichtung zum Transportieren von Behältnissen gemäß Anspruch 1 gerichtet, welche eine erste Transporteinrichtung aufweist, welche einen drehbaren Träger und eine Vielzahl von an diesem Träger angeordneten ersten Greifelementen zum Transportieren der befüllten Behältnisse aufweist. Weiterhin weist die Vorrichtung eine zweite Transporteinrichtung auf, welche eine Vielzahl von Transportelementen zum Transportieren der Behältnisse aufweist, wobei die erste Transporteinrichtung und die zweite Transporteinrichtung derart angeordnet sind, dass die Behältnisse in einem vorgegebenen Übergabebereich von einer Transporteinrichtung an die andere Transporteinrichtung übergeben werden. Die Greifelemente sind dabei insbesondere um eine Drehachse des Trägers bewegbar.

Dabei sind die Greifelemente der ersten Transporteinrichtung in ihrer Gesamtheit gegenüber dem Träger bewegbar. Auch hierunter ist zu verstehen, dass nicht nur einzelne Elemente der Greifelemente, wie beispielsweise Arme der Greifelemente, bewegbar sind, sondern die Greifelemente in ihrer Gesamtheit. So wäre es beispielsweise möglich, dass die Greifelemente zwei Greifarme aufweisen, welche die Behältnisse greifen und diese Greifarme an einem festen Grundkörper angeordnet sind. Diese Grundkörper sind jedoch auch gegenüber dem besagten Träger bewegbar und insbesondere auch in der radialen Richtung bewegbar. Vorzugsweise ist die Transporteinrichtung in der oben beschriebenen Art und Weise ausgeführt. Mit anderen Worten ist unabhängig von einer Greifstellung der Greifelemente ein Schwerpunkt derselben gegenüber dem Träger bewegbar.

Die vorliegende Erfindung ist weiterhin auf ein Verfahren zum Behandeln von Behältnissen gemäß Anspruch 7 gerichtet, wobei in einem ersten Verfahrensschritt die Behältnisse mit einem flüssigen Medium befüllt werden und anschließend die befüllten jedoch noch unverschlossenen Behältnisse an eine erste Transporteinrichtung in einem ersten Übergabereich übergeben werden. Anschließend werden die Behältnisse mit der Transporteinrichtung mittels Greifelementen transportiert, wobei diese Greifelemente an einem drehbaren Träger angeordnet sind.

In einem weiteren Verfahrensschritt werden die Behältnisse von einer ersten Transporteinrichtung an eine zweite Transporteinrichtung in einem vorgegebenen zweiten Übergabebereich übergeben und schließlich - bevorzugt in einem weiteren Verfahrensschritt - verschlossen. Dabei werden erfindungsgemäß die Behältnisse wenigstens in einem Übergabebereich entlang einer im Wesentlichen geradlinigen Bahn transportiert.

Auch hier wird unter einer im Wesentlichen geradlinigen Bahn verstanden, dass diese Bahn einen wesentlich höheren Krümmungsradius aufweist, als die Bahn auf der Strecke zwischen dem ersten Übergabebereich und dem zweiten Übergabebereich. Entlang des letztgenannten Bereichs werden die Behältnisse entlang einer im Wesentlichen kreisförmigen Bahn bewegt. Die Behältnisse werden auch in dem anderen Übergabebereich entlang einer im Wesentlichen geradlinigen Bahn bewegt.

Die Greifelemente werden auch zwischen dem zweiten Übergabebereich und dem ersten Übergabebereich, also demjenigen Abschnitt der Transporteinrichtung, in dem die Greifelemente nicht mit Behältnissen besetzt sind, entlang einer im Wesentlichen kreisförmigen Bahn bewegt. Auch werden die Behältnisse zwischen dem ersten Übergabebereich und dem zweiten Übergabebereich entlang einer im Wesentlichen kreisförmigen Bahn bewegt.

Ein Krümmungsradius der Bahn, entlang dessen die Behältnisse zwischen dem ersten Übergabebereich und dem zweiten Übergabebereich transportiert werden, ist geringer als der Krümmungsradius der Bahn, entlang der die Greifelemente zwischen dem zweiten Übergabebereich und dem ersten Übergabebereich geführt werden. Damit werden die Greifelemente mit den Behältnissen entlang einer Kreisbahn mit kleinerem Krümmungsradius gefördert und die leeren Greifelemente entlang einer Kreisbahn mit größerem Krümmungsradius.

Dabei sind die Greifelemente auf der Bahn zwischen dem ersten Übergabebereich und dem zweiten Übergabebereich wenigstens abschnittsweise eingefahren und zwischen dem zweiten Übergabebereich und dem ersten Übergabebereich in der Bewegungsrichtung im Wesentlichen ausgefahren. Eine radiale Bewegung der Greifelemente tritt in den Übergabebereichen und insbesondere nur in den Anfangsabschnitten der jeweiligen Übergabebereiche auf. Damit tritt so gut wie kein Ruck in der Gesamtbewegung auf.

Es wäre jedoch auch möglich, dass die Greifelemente lediglich in den Übergabebereichen radial aus- und wieder eingefahren werden und ansonsten auf einer Kreisbahn mit konstanter Krümmung bewegt werden.

Weitere Vorteile und Ausführungsformen ergeben sich aus den beigefügten Zeichnungen:
Darin zeigen:
   - Fig. 1: eine grob schematische Darstellung einer erfindungsgemäßen Vorrichtung zum Behandeln von Behältnissen;
   - Fig. 2: eine Darstellung einer erfindungsgemäßen Transporteinrichtung für Behältnisse;
   - Fig. 3: ein Diagramm zur Veranschaulichung der auftretenden Beschleunigungen; und
   - Fig. 4: eine weitere schematische Darstellung zur Veranschaulichung der Erfindung

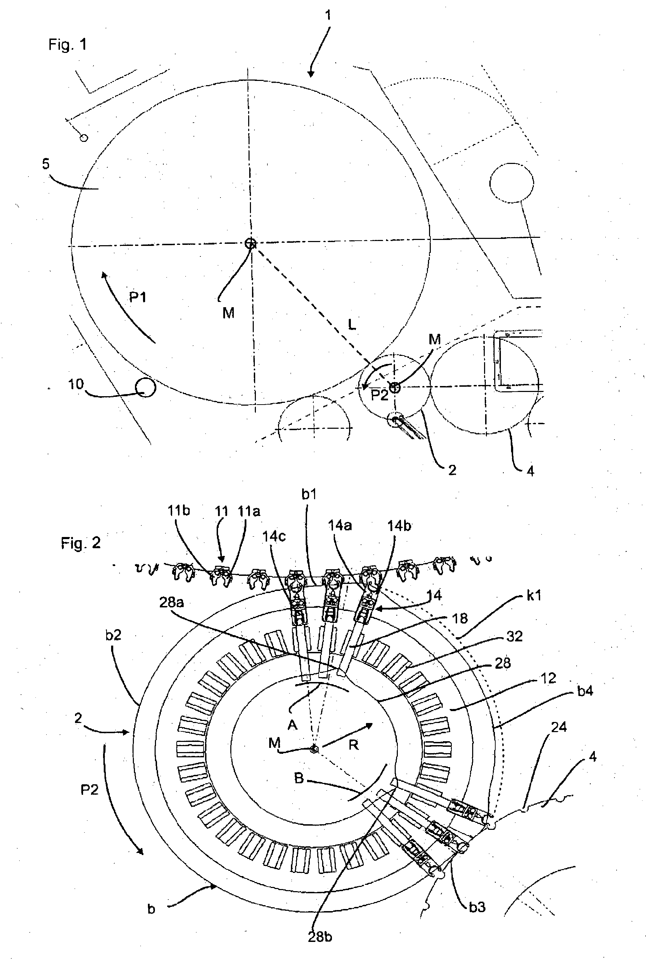

Figur 1 zeigt eine grob schematische Darstellung einer Vorrichtung 1 zum Behandeln von Behältnissen. Dabei bezieht sich das Bezugszeichen 5 auf eine (nur grob schematisch dargestellte) Einrichtung zum Befüllen von Behältnissen. Diese Einrichtung 5 weist dabei ein Transportrad auf, an dem eine Vielzahl von Füllstationen (nicht gezeigt) angeordnet sind, welche eine Vielzahl von Behältnissen 10 befüllen und diese dabei, hier im Uhrzeigersinn, d. h. entlang des Pfeils P1, entlang einer im Wesentlichen kreisförmigen Bahn befördern.

Die auf diese Weise befüllten Behältnisse 10 werden an eine erste Transporteinrichtung 2 übergeben, welche die Behältnisse 10 entlang des Pfeils P2, d. h. entgegen dem Uhrzeigersinn, bewegt. An diese erste Transporteinrichtung 2 schließt sich eine zweite Transporteinrichtung 4 an, welche die Behältnisse 10 übernimmt und mit Verschlüssen versieht. Damit werden gefüllte aber nicht verschlossene Behältnisse von der Befüllungseinrichtung 5 an die erste Transporteinrichtung 2 und von der ersten Transporteinrichtung 2 an die zweite Transporteinrichtung 4 übergeben. Auch die zweite Transporteinrichtung ist dabei in der Art eines Transportsterns ausgebildet, d.h. die Behältnisse werden auch von der zweiten Transporteinrichtung entlang einer im Wesentlichen kreisförmigen Bahn transportiert. Die zweite Transporteirichtung kann dabei bereits mit einem Verschließer kombiniert sein, der die Behältnisse während des Transports verschließt.

Bei diesen Übergaben kommt es zu Änderungen der Bewegungsrichtung und damit auch zu Änderungen in der Beschleunigung, d. h. zu Rucken. Aufgrund dieser ruckartigen Bewegungen kann es dabei zu einem Überschwappen der in den Behältnissen befindlichen Flüssigkeiten kommen. Im Stand der Technik werden die Behältnisse üblicherweise an der Verbindungslinie L zwischen den jeweiligen Mittelpunkten M der einzelnen Transportsterne übergeben.

Üblichweise weist dabei die Befüllungseinrichtung 5 bzw. deren Transporteinrichtung einen wesentlich größeren Teilkreisdurchmesser auf als die erste Transporteinrichtung 2, so dass in dem Bereich der Übergabe der Behältnisse von der Befüllungseinrichtung 5 an die Transporteinrichtung 2 sehr hohe Beschleunigungsänderungen (Betrag und/oder Richtung) auftreten können. Aufgrund von Experimenten sowie theoretischen Überlegungen wurden dabei Methoden entwickelt, um diese Beschleunigungsänderungen gering zu halten und auf diese Weise ein Überschwappen der Flüssigkeit aus dem Behältnis zu verhindern. Dabei kann jedoch davon ausgegangen werden, dass die Behältnisse bis zu einem gewissen Füllstand, beispielsweise kurz unterhalb der Mündung, befüllt sind. Die Bezugszeichen M beziehen sich auf die Mittelpunkte der Transporteinrichtungen 2, 4 bzw. einer (nicht genauer dargestellten) Transporteinrichtung der Befüllungseinrichtung 5.

Figur 2 zeigt eine Veranschaulichung der vorliegenden Erfindung. Auch hier ist wiederum die erste Transporteinrichtung 2 gezeigt, welche die (nicht gezeigten) Behältnisse von der Befüllungseinrichtung 5 übernimmt und an die zweite Transporteinrichtung 4 abgibt. Dabei weist die erste Transporteinrichtung 2, wie an sich aus dem Stand der Technik bekannt, eine Vielzahl von Greifelementen 14 auf, welche die Behältnisse übernehmen und an die zweite Transporteinrichtung 4 abgeben. Dabei können die einzelnen Greifelemente beispielsweise Greifklammern 14a, 14b aufweisen, welche sich zu Übernahme der Flasche auseinander bewegen können. Eine Halterung 14c dieser Greifelemente 14 ist dabei bevorzugt fest an einem Stangenkörper 18 angeordnet, der in einer radialen Richtung R eines insgesamt drehbaren Trägers 12 beweglich ist. Das Bezugszeichen 32 bezieht sich auf Führungseinrichtungen, in denen die Stangenkörper 18 bei ihrer radialen Bewegung geführt werden.

Auch die Befüllungseinrichtung 5 weist dabei eine Vielzahl von Greifelementen 11 mit Greifklammern 11a, 11b auf. Diese Greifelemente 11 sind dabei jedoch in ihrer Gesamtheit nicht in der radialen Richtung der Befüllungseinrichtung 5 bewegbar. Es wäre jedoch auch möglich, dass auch die Greifelemente 11 in einer radialen Richtung der Befüllungseinrichtung 5 bewegbar sind.

Radial innerhalb aller Stangenkörper 18 ist ein Führungskörper 28 angeordnet, der einen bestimmten Bereich der Stangenkörper kontaktieren kann, um diese in der radialen Richtung R zu verschieben. Dabei ist dieser Führungskörper 28 vorzugsweise stationär angeordnet. Bei einer Bewegung der Stangenkörper 18 werden diese Stangenkörper durch den Führungskörper bzw. Führungskurve 28 nach innen bzw. außen geführt. Auf diese Weise ergibt sich ein erster Übergabebereich A in dem die Behältnisse von der Befüllungseinrichtung 5 an die erste Transporteinrichtung 2 übergeben werden, sowie ein zweiter Übergabebereich B, in dem die Behältnisse von der Transporteinrichtung 2 an die Transporteinrichtung 4 übergeben werden.

Die Transporteinrichtung 4 kann dabei ebenfalls (gesteuerte oder nicht gesteuerte) Greifelemente aufweisen, bevorzugt jedoch können lediglich Ausnehmungen 24 vorgesehen sein, welche einen Teil der Behältnisse, wie beispielsweise einen Halsbereich der Behältnisse, aufnehmen.

Durch die Führungskurve 28 wird bewirkt, dass die Behältnisse in dem Übergabebereich A nicht entlang einer kreisförmigen Bahn geführt werden, sondern wie sich aus der dargestellten Bahnkurve b ergibt, entlang einer im Wesentlichen tangentialen Bahn. Durch diese tangentiale Bahn ist eine wesentliche ruckarme Übergabe der Behältnisse von der Befüllungseinrichtung 5 an die erste Transporteinrichtung 2 möglich. Diese tangentiale Bahn ist mit dem Bezugszeichen b1 versehen. Eine entsprechende weitere tangentiale Bahn b3 ergibt sich in dem zweiten Übergabebereich B.

Die Bezugszeichen 28a, 28b kennzeichnen einen Abschnitt der Führungskurve 28, durch den die Greifelemente 14 aus und wieder eingefahren werden. Erfindungsgemäß werden die Greifelemente in oder vor dem Übergabebereich B ausgefahren, zwischen den Übergabebereichen A und B ausgefahren bleiben und erst in oder nach dem Übergabebereich A wieder eingefahren werden. In diesem Fall ergäbe sich die durch die gestrichelte Linie k1 angedeutete Bahn der Behältnisse bzw. Greifelemente.

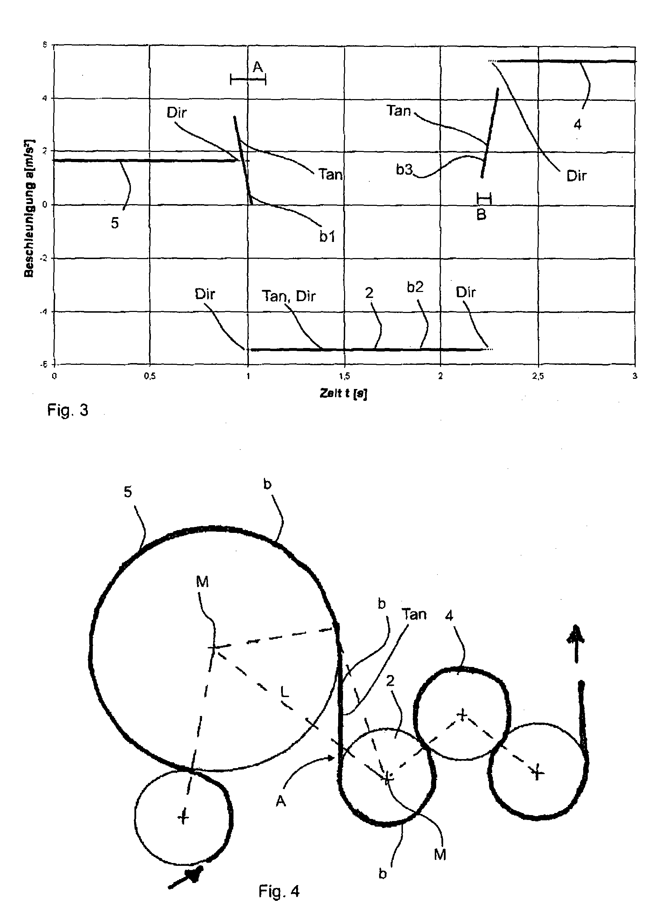

Figur 3 veranschaulicht die an den Behältnissen während des Transports entlang der Kreisbahn b auftretenden Beschleunigungen vor und nach der Übergabe der Behältnisse. Im Bereich der Befüllungseinrichtung 5 werden dabei die Behältnisse mit einer bestimmten Beschleunigung, hier knapp 2 m/s.² geführt, wobei sich diese Beschleunigung aus der Bewegung entlang einer Kreislinie ergibt. Bei der ersten Transporteinrichtung 2 werden die Behältnisse mit einer negativen Beschleunigung geführt, die dem Betrag nach höher ist, als die Beschleunigung an der Befüllungseinrichtung. Diese dem Betrag nach höhere Beschleunigung ergibt sich aus dem geringeren Teilkreisdurchmesser der ersten Transporteinrichtung. Im Bereich der zweiten Transporteinrichtung 4 werden die Behältnisse mit einer Beschleunigung bewegt, welche der Beschleunigung der ersten Transporteinrichtung entspricht, doch dem Vorzeichen nach entgegengesetzt ist.

Die gepunktete Linie Dir zeigt dabei die Beschleunigungsänderungen im Stand der Technik an. Im Stand der Technik werden die Behältnisse unmittelbar von der Befüllungseinrichtung 5 an die Transporteinrichtung 2 übergeben, so dass sich die Beschleunigung schlagartig ändert. Ebenso schlagartig ändert sich die Beschleunigung bei der Übergabe der Behältnisse von der ersten Transporteinrichtung 2 an die zweite Transporteinrichtung 4.

Durch das erfindungsgemäße Verfahren ergibt sich der durch die Linie Tan gezeigte Verlauf. Dabei steigt die Beschleunigung im Bereich der tangentialen Übergabe zunächst an, wird dann jedoch linear geringer, so dass insgesamt ein geringerer Beschleunigungsunterschied zu bewältigen ist. Auf diese Weise treten auch geringere Ruckbewegungen auf, so dass ein Überschwappen von Flüssigkeit verhindert werden kann. Entsprechend tritt auch eine geringere ruckartige Bewegung bei der Übergabe der Behältnisse von der ersten Transporteinrichtung 2 an die zweite Transporteinrichtung 4 auf. Damit treten insgesamt bei dem erfindungsgemäßen Verfahren geringere Beschleunigungsdifferenzen und damit ein geringerer Ruck auf.

Die Bereiche A, B kennzeichnen dabei Bereiche der tangentialen Übergabe der Behältnisse. Die Beschleunigungsänderungen im Bereich der beiden tangentialen Übergaben ergeben sich auch dadurch, dass die Behältnisse durch ein radiales Einziehen der Stangenkörper auf die höhere Winkelgeschwindigkeit der ersten Transporteinrichtung umgestellt werden.

Auf Basis von Fig. 2 wird eine weitere (jedoch nicht gezeigte und nich zur Erfindung gehörende) Ausführungsform einer Vorrichtung erläutert. Auch hier werden die Stangenkörper in radialer Richtung bewegt. Daneben sind hier jedoch auch die Führungseinrichtungen 32 schwenkbar, so dass nicht nur eine radiale Richtung auftritt, sondern auch eine Schwenkbewegung der Stangenkörper und damit der Greifelemente um die jeweiligen Schwenkpunkte. Die Schwenkachsen dieser Schwenkbewegung würden in Fig. 2 senkrecht zur Figurenebene verlaufen.

Dabei tritt bevorzugt die jeweilige radiale Verschiebung der Stangenkörper am Anfang des Übergabebereichs A und am Ende des Übergabebereichs B auf. Genauer gesagt werden die Stangenkörper 18 am Anfang des Übergabebereichs A zunächst schnell radial ausgefahren und anschließend wieder derart radial zurück gefahren, dass die Greifelemente entlang einer tangentialen Strecke bewegt werden. Ebenso werden Greifelemente in dem Übergabebereich B zunächst entlang einer tangentialen Strecke bewegt und anschließend relativ schnell wieder eingefahren. Diese jeweils relativ schnellen Bewegungen in radialer Richtung treten dabei in denjenigen Bereichen auf, in denen die Greifelemente nie mit Behältnissen besetzt sind, d. h. in der Bewegungsrichtung der Behältnisse zwischen dem Übergabebereich B und dem Übergabebereich A.

Fig. 4 zeigt eine weitere Veranschaulichung des Transports der Behältnisse durch eine Vorrichtung. Man erkennt auch hier, dass die Behältnisse in dem Übergabebereich A entlang einem im Wesentlichen geradlinigen Verlauf, genauer einer tangentialen Strecke geführt werden.

## Patentansprüche

1. Vorrichtung zum Transportieren von Behältnissen, mit einer ersten Transporteinrichtung (2), welche einen drehbaren Träger (12) und eine Vielzahl von an diesem Träger angeordneten ersten Greifelementen (14) zum Greifen der gefüllten Behältnisse (10) aufweist und wobei die Greifelemente (14) in einem ersten Übergabebereich (A) die Behältnisse (10) übernehmen, mit einer zweiten Transporteinrichtung (4), welche eine Vielzahl von Transportelementen zum Transportieren der Behältnisse (10) aufweist, wobei die erste Transporteinrichtung (2) und die zweite Transporteinrichtung (4) derart angeordnet sind, dass die Behältnisse (10) in einem vorgegebenen zweiten Übergabebereich (B) von der ersten Transporteinrichtung (2) an die zweite Transporteinrichtung (4) übergeben werden, wobei die Greifelemente (14) wenigstens der ersten Transporteinrichtung (2) in ihrer Gesamtheit gegenüber dem Träger bewegbar sind und derart, dass die Behältnisse (10) zwischen den Übergabebereichen (A, B) entlang einer im Wesentlichen kreisförmigen Bahn (b2) transportiert werden und die Greifelemente (14) zwischen dem zweiten Übergabebereich (B) und dem ersten Übergabebereich (A) ebenso entlang einer im Wesentlichen kreisförmigen Bahn (b4) bewegt werden, und wobei
- ein Krümmungsradius der Bahn (b2), entlang dessen die Behältnisse (10) zwischen dem ersten Übergabebereich (A) und dem zweiten Übergabebereich (B) transportiert werden, geringer ist als der Krümmungsradius der Bahn (b4), entlang deren die Greifelemente zwischen dem zweiten Übergabebereich (B) und dem ersten Übergabebereich (A) geführt werden,
**dadurch gekennzeichnet, dass** die Greifelemente (14) derart an dem Träger (12) angeordnet sind, dass sie in den Übergabebereichen (A, B) entlang einer im Wesentlichen geradlinigen Bahn (b1, b2) bewegt werden, und dass
- die Greifelemente (14) auf der Bahn zwischen dem ersten Übergabebereich (A) und dem zweiten Übergabebereich (B) wenigstens abschnittsweise eingefahren und zwischen dem zweiten Übergabebereich (B) und dem ersten Übergabebereich (A) in der Bewegungsrichtung im Wesentlichen ausgefahren sind, wobei eine rein radiale Bewegung der Greifelemente (14) in den Übergabebereichen (1, 8) auftritt.

2. Vorrichtung nach Anspruch 1, mit einer Befüllungseinrichtung (5), welche die Behältnisse (10) mit einer Flüssigkeit befüllt.

3. Vorrichtung nach Anspruch 3,
**dadurch gekennzeichnet, dass**
die Greifelemente (14) in einer radialen Richtung (R) gegenüber dem Träger (12) bewegbar sind.

4. Vorrichtung nach wenigstens einem der vorangegangenen Ansprüche 2, 3,
**dadurch gekennzeichnet, dass**
die ersten Greifelemente (14) jeweils an Stangenkörpern (18) angeordnet sind und diese Stangenkörper sich in der radialen Richtung (R) erstrecken.

5. Vorrichtung nach Anspruch 4,
**dadurch gekennzeichnet, dass**
die erste Transporteinrichtung (2) einen Führungskörper (28) aufweist, der die Stangenkörper (18) kontaktiert, um deren Bewegung in der radialen Richtung (R) zu bewirken.

6. Vorrichtung nach Anspruch 5,
**dadurch gekennzeichnet, dass**
an dem Träger (2) eine Vielzahl von Führungseinrichtungen (32) angeordnet ist, wobei diese Führungseinrichtungen (32) jeweils eine Bewegung der Stangenkörper (18) in der radialen Richtung führen.

7. Verfahren zum Behandeln von Behältnissen (10) mit den Schritten:
- Befüllten der Behältnisse (2) mit einem flüssigen Medium;
- Übergabe der befüllten Behältnisse an eine erste Transporteinrichtung (2) in einem ersten Übergabebereich (A);
- Transport der Behältnisse mit der Transporteinrichtung (2) mittels Greifelementen (14), wobei diese Greifelemente (14) an einem drehbaren Träger (12) angeordnet sind;
- Übergabe der Behältnisse (10) von der ersten Transporteinrichtung (2) an eine zweite Transporteinrichtung in einem vorgegebenen zweiten Übergabebereich (B)
- Verschließen der Behältnisse (10),
wobei die Behältnisse (10) in den zwei Übergabebereichen (A,B) entlang einer im Wesentlichen geradlinigen Bahn (b1, b3) transportiert werden, wobei
- die ersten Greifelemente (14) derart an dem Träger (12) angeordnet sind, dass die Behältnisse (10) zwischen den Übergabebereichen (A, B) entlang einer im Wesentlichen kreisförmigen Bahn (b2, b4) transportiert Werden und die Greifelemente (14) zwischen dem zweiten Übergabebereich (B) und dem ersten Übergabebereich (A) ebenso entlang einer im Wesentlichen kreisförmigen Bahn (b4) bewegt werden, und wobei
- ein Krümmungsradius der Bahn (b2), entlang dessen die Behältnisse (10) zwischen dem ersten Übergabebereich (A) und dem zweiten Übergabebereich (B) transportiert werden, geringer ist als der Krümmungsradius der Bahn (b4), entlang deren die Greifelemente zwischen dem zweiten Übergabebereich (B) und dem ersten Übergabebereich (A) geführt werden, und
- die Greifelemente (14) auf der Bahn zwischen dem ersten Übergabebereich (A) und dem zweiten Übergabebereich (B) wenigstens abschnittsweise eingefahren und zwischen dem zweiten Übergabebereich (B) und dem ersten Übergabebereich (A) in der Bewegungsrichtung im Wesentlichen ausgefahren sind, wobei eine rein radiale Bewegung der Greifelemente (14) in den Übergabebereichen (A, B) auftritt.

## Claims

1. Apparatus for transporting containers, comprising a first transport device (2) which has a rotatable carrier (12) and a plurality of first gripping elements (14) arranged on said carrier for gripping the filled containers (10), and wherein the gripping elements (14) take hold of the containers (10) in a first transfer region (A), comprising a second transport device (4) which has a plurality of transport elements for transporting the containers (10), wherein the first transport device (2) and the second transport device (4) are arranged in such a way that the containers (10) are transferred from the first transport device (2) to the second transport device (4) in a predefined second transfer region (B), wherein the gripping elements (14) at least of the first transport device (2) are movable in their entirety relative to the carrier and such that the containers (10) are transported along a substantially circular path (b2) between the transfer regions (A, B) and the gripping elements (14) are likewise moved along a substantially circular path (b4) between the second transfer region (B) and the first transfer region (A), and wherein
- a radius of curvature of the path (b2) along which the containers (10) are transported between the first transfer region (A) and the second transfer region (B) is smaller than the radius of curvature of the path (b4) along which the gripping elements are guided between the second transfer region (B) and the first transfer region (A),
**characterized in that** the gripping elements (14) are arranged on the carrier (12) in such a way that they are moved along a substantially rectilinear path (b1, b2) in transfer regions (A, B), and **in that**
- the gripping elements (14) are retracted at least in some sections on the path between the first transfer region (A) and the second transfer region (B) and are substantially extended in the movement direction between the second transfer region (B) and the first transfer region (A), wherein a purely radial movement of the gripping elements (14) occurs in the transfer regions (A, B).

2. Apparatus according to claim 1, comprising a filling device (5) which fills the containers (10) with a liquid.

3. Apparatus according to claim 2, **characterized in that** the gripping elements (14) are movable in a radial direction (R) relative to the carrier (12).

4. Apparatus according to at least one of the preceding claims 2, 3, **characterized in that** the first gripping elements (14) are each arranged on rod-like bodies (18) and said rod-like bodies extend in the radial direction (R).

5. Apparatus according to claim 4, **characterized in that** the first transport device (2) has a guide body (28) which makes contact with the rod-like bodies (18) in order to bring about the movement thereof in the radial direction (R).

6. Apparatus according to claim 5, **characterized in that** a plurality of guide devices (32) are arranged on the carrier (2), wherein said guide devices (32) each guide a movement of the rod-like bodies (18) in the radial direction.

7. Method for treating containers (10), comprising the steps:
- filling the containers (10) with a liquid medium;
- transferring the filled containers to a first transport device (2) in a first transfer region (A);
- transporting the containers by the transport device (2) by means of gripping elements (14), wherein said gripping elements (14) are arranged on a rotatable carrier (12);
- transferring the containers (10) from the first transport device (2) to a second transport device in a predefined second transfer region (B);
- closing the containers (10),
wherein
the containers (10) are transported along a substantially rectilinear path (b1, b3) in the two transfer regions (A, B), wherein
- the first gripping elements (14) are arranged on the carrier (12) in such a way that the containers (10) are transported along a substantially circular path (b2, b4) between the transfer regions (A, B) and the gripping elements (14) are likewise moved along a substantially circular path (b4) between the second transfer region (B) and the first transfer region (A), and wherein
- a radius of curvature of the path (b2) along which the containers (10) are transported between the first transfer region (A) and the second transfer region (B) is smaller than the radius of curvature of the path (b4) along which the gripping elements are guided between the second transfer region (B) and the first transfer region (A), and
- the gripping elements (14) are retracted at least in some sections on the path between the first transfer region (A) and the second transfer region (B) and are substantially extended in the movement direction between the second transfer region (B) and the first transfer region (A), wherein a purely radial movement of the gripping elements (14) occurs in the transfer regions (A, B).

## Revendications

1. Dispositif de transport de récipients, pourvu d'un premier système de transport (2), lequel comprend un support rotatif (12) et une pluralité de premiers éléments de préhension (14) disposés sur ce support et destinés à saisir les récipients (10) remplis, et les éléments de préhension (14) prélevant les récipients (10) dans une première zone de transfert (A), d'un deuxième système de transport (4), lequel comprend une pluralité d'éléments de transport destinés à transporter les récipients (10), le premier système de transport (2) et le deuxième système de transport (4) étant disposés de telle manière que les récipients (10) sont transférés dans une deuxième zone de transfert (B) prédéfinie du premier système de transport (2) sur le deuxième système de transport (4), les éléments de préhension (14) au moins du premier système de transport (2) étant mobiles conjointement par rapport au support et de telle manière que les récipients (10) sont transportés entre les zones de transfert (A, B) le long d'une bande (b2) sensiblement circulaire et que les éléments de préhension (14) sont également déplacés entre la deuxième zone de transfert (B) et la première zone de transfert (A) le long d'une bande (b4) sensiblement circulaire, et
- un rayon de courbure de la bande (b2), le long duquel les récipients (10) sont transportés entre la première zone de transfert (A) et la deuxième zone de transfert (B), étant inférieur au rayon de courbure de la bande (b4) le long duquel les éléments de préhension sont guidés entre la deuxième zone de transfert (B) et la première zone de transfert (A),
**caractérisé en ce que** les éléments de préhension (14) sont disposés sur le support (12) de telle manière qu'ils sont déplacés dans des zones de transfert (A, B) le long d'une bande (b1, b2) sensiblement rectiligne, et **en ce que**
- les éléments de préhension (14) sont rentrés au moins en sections sur la bande entre la première zone de transfert (A) et la deuxième zone de transfert (B), et sont sensiblement déployés entre la deuxième zone de transfert (B) et la première zone de transfert (A) dans le sens du mouvement, un mouvement exclusivement radial des éléments de préhension (14) se produisant dans les zones de transfert (A, B).

2. Dispositif selon la revendication 1, comprenant un système de remplissage (5), lequel remplit les récipients (10) d'un liquide.

3. Dispositif selon la revendication 2,
**caractérisé en ce que**
les éléments de préhension (14) sont mobiles dans une direction radiale (R) par rapport au support (12).

4. Dispositif selon au moins l'une des revendications précédentes 2, 3,
**caractérisé en ce que**
les premiers éléments de préhension (14) sont disposés respectivement sur des corps en forme de tige (18) et ces corps en forme de tige s'étendent dans la direction radiale (R).

5. Dispositif selon la revendication 4,
**caractérisé en ce que**
le premier système de transport (2) comprend un corps de guidage (28), qui est en contact avec les corps en forme de tige (18), afin de faire déplacer lesdits corps en forme de tige dans la direction radiale (R).

6. Dispositif selon la revendication 5,
**caractérisé en ce qu'**
une pluralité de systèmes de guidage (32) sont disposés sur le support (2), ces systèmes de guidage (32) guidant respectivement un mouvement des corps en forme de tige (18) dans la direction radiale.

7. Procédé de traitement de récipients (10) comprenant les étapes :
- de remplissage des récipients (10) d'un milieu liquide ;
- de transfert des récipients remplis sur un premier système de transport (2) dans une première zone de transfert (A) ;
- de transport des récipients par le biais du système de transport (2) au moyen des éléments de préhension (14), ces éléments de préhension (14) étant disposés sur un support (12) rotatif ;
- de transfert des récipients (10) du premier système de transport (2) à un deuxième système de transport dans une deuxième zone de transfert (B) prédéfinie,
- de fermeture des récipients (10),
les récipients (10) étant transportés dans les deux zones de transfert (A, B) le long d'une bande (b1, b3) sensiblement rectiligne,
- les premiers éléments de préhension (14) étant disposés sur le support (12) de telle manière que les récipients (10) sont transportés entre les zones de transfert (A, B) le long d'une bande (b2, b4) sensiblement circulaire et que les éléments de préhension (14) entre la deuxième zone de transfert (B) et la première zone de transfert (A) sont également déplacés le long d'une bande (b4) sensiblement circulaire, et
- un rayon de courbure de la bande (b2), le long duquel les récipients (10) sont transportés entre la première zone de transfert (A) et la deuxième zone de transfert (B), étant inférieur au rayon de courbure de la bande (b4) le long duquel les éléments de préhension sont guidés entre la deuxième zone de transfert (B) et la première zone de transfert (A), et
- les éléments de préhension (14) étant rentrés au moins en sections sur la bande entre la première zone de transfert (A) et la deuxième zone de transfert (B), et étant sensiblement déployés entre la deuxième zone de transfert (B) et la première zone de transfert (A) dans le sens du mouvement, un mouvement exclusivement radial des éléments de préhension (14) se produisant dans les zones de transfert (A, B).
